# EUROPÄISCHE PATENTSCHRIFT

(11) **EP 3 288 240 B1**
(45) Veröffentlichungstag und Bekanntmachung des Hinweises auf die Patenterteilung: **06.03.2019**
(21) Anmeldenummer: 16185509.3
(22) Anmeldetag: 24.08.2016
(51) Int. Cl.: H04W 8/18, H04L 29/08, H04W 8/20

(54) **PROFIL-SERVER ZUM BEREITSTELLEN EINES KOMMUNIKATIONSPROFILS FÜR DIE KOMMUNIKATION ÜBER EIN KOMMUNIKATIONSNETZWERK**
PROFILE SERVER FOR PROVIDING A COMMUNICATION PROFILE FOR COMMUNICATION IN A COMMUNICATION NETWORK
SERVEUR DE PROFIL DESTINE A METTRE A DISPOSITION UN PROFIL DE COMMUNICATIONS POUR LA COMMUNICATION PAR L'INTERMEDIAIRE D'UN RESEAU DE COMMUNICATION

(43) Veröffentlichungstag der Anmeldung: 28.02.2018
(73) Patentinhaber: Deutsche Telekom AG, 53113 Bonn (DE)
(72) Erfinder: Sonntag, Thomas, 53343 Wachtberg (DE)
(74) Vertreter: Patentship Patentanwaltsgesellschaft mbH

(56) Entgegenhaltungen:
- EP-A1- 2 747 466
- WO-A1-2015/052422

## Beschreibung

### TECHNISCHES GEBIET

Die vorliegende Erfindung betrifft das Gebiet der Kommunikationstechnik, insbesondere der Bereitstellung eines Kommunikationsprofils für die Kommunikation über ein Kommunikationsnetzwerk unter Verwendung eines Teilnehmeridentitätsmoduls.

### TECHNISCHER HINTERGRUND

Die Produktion von Teilnehmeridentitätsmodulen, beispielsweise von SIM (Subscriber Identity Module) Karten, erfolgt üblicherweise in mehreren Schritten.

Zunächst erfolgt eine Auswahl von ICCIDs (Integrated Circuit Card Identifiers) und IMSIs (International Mobile Subscriber Identities), welche auch als Ressourcen (engl. "Resources") bezeichnet werden. Anschließend wird eine Erzeugung von Schlüsseln (engl. "Keys"), wie beispielsweise von Authentifizierungsschlüsseln, PINs (Personal Identification Numbers), PUKs (Personal Unblocking Keys) und OTA (Over-the-Air) Schlüsseln, durchgeführt.

Anschließend erfolgt eine Einrichtung der Ressourcen und Schlüssel, welche auch als Subskriptionen (engl. "Subscriptions") bezeichnet werden, in Backendsystemen eines Netzbetreibers, wie beispielsweise einem HLR (Home Location Register), einem Abrechnungssystem und/oder OTA (Over-the-Air) Servern. Schließlich werden die Teilnehmeridentitätsmodule physisch produziert und ausgeliefert.

Da die Einrichtung und insbesondere die Produktion der Teilnehmeridentitätsmodule eine gewisse Zeit in Anspruch nimmt, werden die beschriebenen Schritte üblicherweise in Stapeln (engl. "Batches") mit typischerweise mehreren 100-1000 Teilnehmeridentitätsmodulen durchgeführt. Produzierte Stapel werden anschließend direkt an Großkunden versendet oder eingelagert. Aus einem Lager werden diese dann typischerweise in kleinen Stückzahlen, beispielsweise zwischen 1 und 100 Stück, an Endkunden oder Verkaufspunkte geliefert. Diese Lagerhaltung ist mit mehreren Nachteilen verbunden. Zum einen ist sie kostenintensiv. Zum anderen müssen betroffene Teilnehmeridentitätsmodule vernichtet oder aufwändig repariert werden, falls sich die Lagerware als fehlerhaft oder veraltet herausstellt.

Diese Nachteile können gelindert werden, indem der minimale Lagerbestand nₘᵢₙ möglichst klein gewählt wird. Bei der Produktion kann nₘᵢₙ jedoch aus mehreren Gründen nicht beliebig klein gewählt werden. Zum einen benötigt die physische Produktion eine gewisse Zeit. Zum anderen benötigt die Einrichtung in den Backendsystemen eine gewisse Zeit.

Gegenwärtig erfolgt auch die Produktion von Kommunikationsprofilen für eSIMs (embedded Subscriber Identity Modules) analog zur beschriebenen Produktion von SIM-Karten.

Die Druckschrift EP 2 747 466 A1 offenbart ein Verfahren zum Versehen eines sicheren Elementes eines mobilen Terminals mit einem Subskriptionsprofil über die Luftschnittstelle (engl. Over-The-Air, OTA). Dabei werden ein netzwerkspezifischer Teil des Subskriptionsprofils durch einen ersten Server und ein hardwarespezifischer Teil des Subskriptionsprofils durch einen zweiten Server bereitgestellt.

Die Druckschrift WO 2015/052422 A1 offenbart ein Verfahren zum Personalisieren eines sicheren Elementes über die Luftschnittstelle (engl. Over-The-Air, OTA). Dabei werden ein Skript zur Vor-Personalisierung und ein Skript zur Personalisierung des sicheren Elementes verwendet. Das Verfahren kann mittels eines SM-DP Servers implementiert werden.

### BESCHREIBUNG DER ERFINDUNG

Es ist daher eine Aufgabe der vorliegenden Erfindung, ein effizientes und flexibles Konzept zur Bereitstellung eines Kommunikationsprofils für ein Teilnehmeridentitätsmodul zu schaffen.

Diese Aufgabe wird durch die Merkmale der unabhängigen Ansprüche gelöst. Vorteilhafte Ausführungsformen der Erfindung sind Gegenstand der abhängigen Ansprüche.

Die vorliegende Erfindung basiert auf der Erkenntnis, dass die obige Aufgabe durch einen Profil-Server gelöst werden kann, welcher ausgebildet ist, ein Kommunikationsprofil für ein Teilnehmeridentitätsmodul bedarfssynchron (engl. Just-In-Time, JIT) zu erzeugen. Das Kommunikationsprofil wird hierbei aus Subskriptionsdaten erzeugt, wobei die Erzeugung des Kommunikationsprofils bedarfssynchron unmittelbar vor einem Übertragen des Kommunikationsprofils an das Teilnehmeridentitätsmodul erfolgen kann. Zur Bereitstellung von Subskriptionen kann eine Netzwerkentität eingesetzt werden, in welcher Subskriptionen unterschiedlicher Subskriptionstypen vorgespeichert sind und bei Bedarf an den Profil-Server übermittelt werden. Die Zuordnung einer Subskription zu dem Teilnehmeridentitätsmodul erfolgt unter Verwendung einer Kennung, welche beispielsweise eine Teilnehmeridentitätskennung oder ein Token sein kann.

Dadurch wird erreicht, dass die oben beschriebenen Nachteile der herkömmlichen Produktion vermieden werden können und ein effizientes und flexibles Konzept zum Bereitstellen eines Kommunikationsprofils realisiert werden kann.

Gemäß einem ersten Aspekt betrifft die Erfindung einen Profil-Server zum Bereitstellen eines Kommunikationsprofils für die Kommunikation über ein Kommunikationsnetzwerk, wobei das Kommunikationsprofil einem Teilnehmeridentitätsmodul zugeordnet ist. Der Profil-Server umfasst eine Datenbank, in welcher eine Mehrzahl von Subskriptionen mit einer Mehrzahl von Kennungen gespeichert ist, wobei jeder Subskription eine Kennung zugeordnet ist, und wobei jede Subskription Subskriptionsdaten zum Erzeugen eines Kommunikationsprofils umfasst. Der Profil-Server umfasst ferner eine Kommunikationsschnittstelle, welche ausgebildet ist, eine Kennung von dem Teilnehmeridentitätsmodul zu empfangen. Der Profil-Server umfasst zudem einen Prozessor, welcher ausgebildet ist, eine Subskription aus der Datenbank abzurufen, welche der empfangenen Kennung zugeordnet ist, Subskriptionsdaten aus der abgerufenen Subskription zu extrahieren, und das Kommunikationsprofil auf der Basis der extrahierten Subskriptionsdaten zu erzeugen. Die Kommunikationsschnittstelle ist ferner ausgebildet, das erzeugte Kommunikationsprofil an das Teilnehmeridentitätsmodul auszusenden, um das Kommunikationsprofil für die Kommunikation über das Kommunikationsnetzwerk bereitzustellen. Dadurch wird der Vorteil erreicht, dass ein effizientes und flexibles Konzept zur Bereitstellung eines Kommunikationsprofils für ein Teilnehmeridentitätsmodul realisiert werden kann. Der Profil-Server kann beispielsweise ein SMDP Server oder ein SMDP+ Server sein.

Das Teilnehmeridentitätsmodul kann eine SIM sein, welche z.B. durch eine SIM-Karte oder als eSIM-Profil realisiert werden kann. Ein eSIM-Profil kann eine Implementierung einer SIM bilden. Eine eUICC kann als Hardwarekomponente mehrere eSIM-Profile enthalten. Die Erzeugung des Kommunikationsprofils durch den Prozessor kann unter Verwendung bekannter Ansätze erfolgen.

Gemäß einer Ausführungsform ist der Prozessor ausgebildet, die empfangene Kennung mit der Mehrzahl von Kennungen zu vergleichen. Dadurch wird der Vorteil erreicht, dass die Subskription effizient aus der Datenbank abgerufen werden kann.

Gemäß einer Ausführungsform umfassen die Subskriptionsdaten: eine International Mobile Subscriber Identity (IMSI), einen Authentifizierungsschlüssel (Ki), und/oder einen Integrated Circuit Card Identifier (ICCID). Dadurch wird der Vorteil erreicht, dass Daten bei der Erzeugung des Kommunikationsprofils berücksichtigt werden können, welche eindeutig dem Teilnehmeridentitätsmoduls zugeordnet sind.

Gemäß einer Ausführungsform sind jeder Subskription ferner Profildaten zum Erzeugen eines Kommunikationsprofils zugeordnet, wobei der Prozessor ausgebildet ist, das Kommunikationsprofil ferner auf der Basis der Profildaten zu erzeugen, welche der abgerufenen Subskription zugeordnet sind. Dadurch wird der Vorteil erreicht, dass das Kommunikationsprofil effizient erzeugt werden kann. Die Mehrzahl von Subskriptionen und die jeweiligen Profildaten können unabhängig voneinander verwaltet und bereitgestellt werden. Die jeweiligen Profildaten können in der Datenbank vorgespeichert sein.

Gemäß einer Ausführungsform umfassen die Profildaten: eine Softwareanwendung des Teilnehmeridentitätsmodules, eine Angabe einer Softwareanwendung des Teilnehmeridentitätsmodules, einen Softwarecode, ein Dateisystem des Teilnehmeridentitätsmodules, oder eine Angabe eines Netzwerkalgorithmus für die Kommunikation über das Kommunikationsnetzwerk. Dadurch wird der Vorteil erreicht, dass Daten bei der Erzeugung des Kommunikationsprofils berücksichtigt werden können, welche mehreren Teilnehmeridentitätsmodulen zugeordnet sein können. Das Dateisystem kann beispielsweise einen Service Provider Name (SPN), einen Public Land Mobile Network (PLMN) Selector, eine SPID, und/oder eine GID umfassen.

Gemäß einer Ausführungsform ist die Kommunikationsschnittstelle ausgebildet, einen Eigenschaftsindikator von dem Teilnehmeridentitätsmodul zu empfangen, wobei der Eigenschaftsindikator eine eingebettete Eigenschaft des Teilnehmeridentitätsmoduls anzeigt, und wobei der Prozessor ausgebildet ist, das Kommunikationsprofil ferner auf der Basis der eingebetteten Eigenschaft des Teilnehmeridentitätsmoduls zu erzeugen. Dadurch wird der Vorteil erreicht, dass eine Eigenschaft einer Hardwarekomponente bei der Erzeugung des Kommunikationsprofils berücksichtigt werden kann. Die eingebettete Eigenschaft kann beispielsweise ein verfügbarer Speicherplatz des Teilnehmeridentitätsmoduls oder eine Kommunikationsfähigkeit des Teilnehmeridentitätsmoduls, beispielsweise eine Kommunikationsfähigkeit mittels Near-Field-Communication (NFC), sein.

Gemäß einer Ausführungsform ist die empfangene Kennung eine Teilnehmeridentitätskennung, welche dem Teilnehmeridentitätsmodul zugeordnet ist. Dadurch wird der Vorteil erreicht, dass eine elektronische Kennung des Teilnehmeridentitätsmoduls zum Abrufen der Subskription verwendet werden kann. Die Teilnehmeridentitätskennung kann eine EID (eUICC Identification) sein.

Gemäß einer Ausführungsform ist die empfangene Kennung ein Token, welches dem Teilnehmeridentitätsmodul zugeordnet ist. Dadurch wird der Vorteil erreicht, dass ein erzeugtes Token zum Abrufen der Subskription verwendet werden kann. Das Token kann durch eine Zeichenfolge, insbesondere eine Ziffernfolge, gebildet sein.

Gemäß einer Ausführungsform ist die Kommunikationsschnittstelle ausgebildet, ein Bereitstellungssignal von einer Netzwerkentität zu empfangen, wobei das empfangene Bereitstellungssignal eine Subskription mit einer Kennung umfasst, wobei die Subskription der Kennung zugeordnet ist, und wobei die Kommunikationsschnittstelle ausgebildet ist, die Subskription mit der Kennung aus dem empfangenen Bereitstellungssignal zu extrahieren, und die extrahierte Subskription mit der extrahierten Kennung in der Datenbank zu speichern. Dadurch wird der Vorteil erreicht, dass Subskriptionen mit Kennungen effizient bereitgestellt werden können. Ferner kann die Datenbank effizient aktualisiert werden.

Gemäß einem zweiten Aspekt betrifft die Erfindung eine Netzwerkentität zum Kommunizieren mit einem Profil-Server. Die Netzwerkentität umfasst eine Datenbank, in welcher eine Mehrzahl von Subskriptionen gespeichert ist, wobei jede Subskription Subskriptionsdaten zum Erzeugen eines Kommunikationsprofils umfasst, und wobei jede Subskription einem Subskriptionstyp zugeordnet ist. Die Netzwerkentität umfasst ferner einen Prozessor, welcher ausgebildet ist, eine Subskription aus der Mehrzahl von Subskriptionen auszuwählen, wobei die ausgewählte Subskription einer Kennung zugeordnet ist. Der Prozessor ist ferner ausgebildet, ein Bereitstellungssignal zu erzeugen, wobei das Bereitstellungssignal die ausgewählte Subskription mit der Kennung umfasst. Die Netzwerkentität umfasst zudem eine Kommunikationsschnittstelle, welche ausgebildet ist, das Bereitstellungssignal an den Profil-Server auszusenden. Dadurch wird der Vorteil erreicht, dass ein effizientes und flexibles Konzept zur Bereitstellung eines Kommunikationsprofils für ein Teilnehmeridentitätsmodul realisiert werden kann. Die Netzwerkentität kann einem Netzbetreiber eines Kommunikationsnetzwerkes zugeordnet sein. Die Netzwerkentität kann ein Server sein. Die Mehrzahl von Subskriptionen kann stapelweise erzeugt und in der Datenbank vorgespeichert sein. Die Datenbank kann mithin ein Subskriptionslager (engl. "Subscription Store") bilden.

Gemäß einer Ausführungsform ist die Kommunikationsschnittstelle ausgebildet, einen Subskriptionstypindikator zu empfangen, wobei der Subskriptionstypindikator einen Subskriptionstyp anzeigt, wobei der Prozessor ausgebildet ist, den Subskriptionstyp aus dem Subskriptionstypindikator zu extrahieren, die Subskription aus der Mehrzahl von Subskriptionen auf der Basis des extrahierten Subskriptionstyps auszuwählen, und wobei die ausgewählte Subskription dem extrahierten Subskriptionstyp entspricht. Dadurch wird der Vorteil erreicht, dass die Subskription effizient ausgewählt werden kann. Der extrahierte Subskriptionstyp kann der Kennung zugeordnet sein.

Gemäß einer Ausführungsform ist der Prozessor ausgebildet, die Subskription aus der Mehrzahl von Subskriptionen auf der Basis eines vorbestimmten Subskriptionstyps auszuwählen, wobei die ausgewählte Subskription dem vorbestimmten Subskriptionstyp entspricht. Dadurch wird der Vorteil erreicht, dass die Subskription effizient ausgewählt werden kann. Der vorbestimmte Subskriptionstyp kann, beispielsweise in der Datenbank der Netzwerkentität, vorgespeichert sein. Der vorbestimmte Subskriptionstyp kann der Kennung zugeordnet sein.

Gemäß einer Ausführungsform ist die Kennung eine Teilnehmeridentitätskennung, wobei die Kommunikationsschnittstelle ausgebildet ist, die Teilnehmeridentitätskennung zu empfangen. Dadurch wird der Vorteil erreicht, dass eine elektronische Kennung eines Teilnehmeridentitätsmoduls verwendet werden kann.

Gemäß einer Ausführungsform ist die Kennung ein Token, wobei der Prozessor ausgebildet ist, das Token zu erzeugen. Dadurch wird der Vorteil erreicht, dass ein intern erzeugtes Token verwendet werden kann.

Gemäß einer Ausführungsform ist die Kennung ein Token, wobei die Kommunikationsschnittstelle ausgebildet ist, das Token zu empfangen. Dadurch wird der Vorteil erreicht, dass das Token extern erzeugt werden kann.

Gemäß einer Ausführungsform zeigt der Subskriptionstyp einen Wertebereich, insbesondere eine Untergrenze und eine Obergrenze, von Subskriptionsdaten, insbesondere einer International Mobile Subscriber Identity (IMSI), eines Authentifizierungsschlüssels (Ki), oder eines Integrated Circuit Card Identifiers (ICCID), an. Dadurch wird der Vorteil erreicht, dass die Subskription aus der Datenbank effizient ausgewählt werden kann.

Gemäß einer Ausführungsform sind jeder Subskription ferner Profildaten zum Erzeugen eines Kommunikationsprofils zugeordnet, wobei jede Subskription einem Profiltyp zugeordnet ist. Dadurch wird der Vorteil erreicht, dass das Kommunikationsprofil effizient erzeugt werden kann. Der Profiltyp kann eine Klasse der jeweiligen Profildaten, beispielsweise "Prepaid" oder "Postpaid", anzeigen.

Gemäß einer Ausführungsform ist der Prozessor ausgebildet, den Profil-Server aus einer Mehrzahl von Profil-Servern auf der Basis des Profilstyps der ausgewählten Subskription auszuwählen. Dadurch wird der Vorteil erreicht, dass dedizierte Profil-Server für verschiedene Profiltypen zum Erzeugen eines Kommunikationsprofils verwendet werden können.

Gemäß einer Ausführungsform ist der Prozessor ausgebildet, den Profil-Server aus der Mehrzahl von Profil-Servern ferner auf der Basis des Subskriptionstyps der ausgewählten Subskription auszuwählen. Dadurch wird der Vorteil erreicht, dass dedizierte Profil-Server ferner für verschiedene Subskriptionstypen zum Erzeugen eines Kommunikationsprofils verwendet werden können.

Gemäß einer Ausführungsform ist der Prozessor ausgebildet, eine Netzwerkadresse des Profil-Servers zu bestimmen, und einen Aktivierungscode zu erzeugen, wobei der Aktivierungscode die Netzwerkadresse und die Kennung, insbesondere das Token, anzeigt. Dadurch wird der Vorteil erreicht, dass ein Nutzer nach Eingabe des Aktivierungscodes effizient ein Kommunikationsprofil von dem Profil-Server abrufen kann. Der Aktivierungscode kann beispielsweise durch einen QR-Code oder einen Strichcode repräsentiert werden.

Gemäß einem dritten Aspekt betrifft die Erfindung ein Subnetzwerk eines Kommunikationsnetzwerkes mit einer Mehrzahl von Subnetzwerken. Das Subnetzwerk umfasst einen Profil-Server gemäß dem ersten Aspekt der Erfindung, und eine Netzwerkentität gemäß dem zweiten Aspekt der Erfindung. Dadurch wird der Vorteil erreicht, dass ein effizientes und flexibles Konzept zur Bereitstellung eines Kommunikationsprofils für ein Teilnehmeridentitätsmodul realisiert werden kann. Der Profil-Server und die Netzwerkentität können ein Kommunikationssystem zum Bereitstellen eines Kommunikationsprofils für die Kommunikation über das Kommunikationsnetzwerk bilden.

Gemäß einer Ausführungsform umfasst das Subnetzwerk ferner ein Teilnehmeridentitätsmodul. Dadurch wird der Vorteil erreicht, dass eine Bereitstellung eines Kommunikationsprofils für das Teilnehmeridentitätsmodul effizient realisiert werden kann.

Gemäß einer Ausführungsform ist das Kommunikationsnetzwerk ein Kommunikationsnetzwerk der fünften Generation (5G) oder einer weiteren Generation, wobei das Subnetzwerk ein Slice des Kommunikationsnetzwerkes ist. Dadurch wird der Vorteil erreicht, dass das Kommunikationsprofil effizient bereitgestellt werden kann.

Gemäß einem vierten Aspekt betrifft die Erfindung ein Verfahren zum Bereitstellen eines Kommunikationsprofils für die Kommunikation über ein Kommunikationsnetzwerk unter Verwendung eines Profil-Servers, wobei das Kommunikationsprofil einem Teilnehmeridentitätsmodul zugeordnet ist. Der Profil-Server umfasst eine Datenbank, eine Kommunikationsschnittstelle und einen Prozessor. In der Datenbank ist eine Mehrzahl von Subskriptionen mit einer Mehrzahl von Kennungen gespeichert, wobei jeder Subskription eine Kennung zugeordnet ist, und wobei jede Subskription Subskriptionsdaten zum Erzeugen eines Kommunikationsprofils umfasst. Das Verfahren umfasst ein Empfangen einer Kennung von dem Teilnehmeridentitätsmodul durch die Kommunikationsschnittstelle, ein Abrufen einer Subskription aus der Datenbank durch den Prozessor, welche der empfangenen Kennung zugeordnet ist, ein Extrahieren von Subskriptionsdaten aus der abgerufenen Subskription durch den Prozessor, ein Erzeugen des Kommunikationsprofils auf der Basis der extrahierten Subskriptionsdaten durch den Prozessor, und ein Aussenden des erzeugten Kommunikationsprofils an das Teilnehmeridentitätsmodul durch die Kommunikationsschnittstelle, um das Kommunikationsprofil für die Kommunikation über das Kommunikationsnetzwerk bereitzustellen. Dadurch wird der Vorteil erreicht, dass ein effizientes und flexibles Konzept zur Bereitstellung eines Kommunikationsprofils für ein Teilnehmeridentitätsmodul realisiert werden kann.

Das Verfahren kann durch den Profil-Server ausgeführt werden. Weitere Merkmale des Verfahrens resultieren unmittelbar aus den Merkmalen und/oder der Funktionalität des Profil-Servers.

Gemäß einem fünften Aspekt betrifft die Erfindung ein Verfahren zum Kommunizieren mit einem Profil-Server unter Verwendung einer Netzwerkentität. Die Netzwerkentität umfasst eine Datenbank, einen Prozessor und eine Kommunikationsschnittstelle. In der Datenbank ist eine Mehrzahl von Subskriptionen gespeichert, wobei jede Subskription Subskriptionsdaten zum Erzeugen eines Kommunikationsprofils umfasst, und wobei jede Subskription einem Subskriptionstyp zugeordnet ist. Das Verfahren umfasst ein Auswählen einer Subskription aus der Mehrzahl von Subskriptionen durch den Prozessor, wobei die ausgewählte Subskription einer Kennung zugeordnet ist, ein Erzeugen eines Bereitstellungssignals durch den Prozessor, wobei das Bereitstellungssignal die ausgewählte Subskription mit der Kennung umfasst, und ein Aussenden des Bereitstellungssignals an den Profil-Server durch die Kommunikationsschnittstelle. Dadurch wird der Vorteil erreicht, dass ein effizientes und flexibles Konzept zur Bereitstellung eines Kommunikationsprofils für ein Teilnehmeridentitätsmodul realisiert werden kann.

Das Verfahren kann durch die Netzwerkentität ausgeführt werden. Weitere Merkmale des Verfahrens resultieren unmittelbar aus den Merkmalen und/oder der Funktionalität der Netzwerkentität.

Gemäß einem sechsten Aspekt betrifft die Erfindung ein Computerprogramm mit einem Programmcode zum Ausführen des Verfahrens gemäß dem vierten Aspekt der Erfindung oder des Verfahrens gemäß dem fünften Aspekt der Erfindung. Dadurch wird der Vorteil erreicht, dass die Verfahren effizient ausgeführt werden können.

Der Profil-Server und/oder die Netzwerkentität können programmtechnisch eingerichtet sein, um den Programmcode oder Teile des Programmcodes auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm eines Profil-Servers zum Bereitstellen eines Kommunikationsprofils für die Kommunikation über ein Kommunikationsnetzwerk;
Fig. 2 ein schematisches Diagramm einer Netzwerkentität zum Kommunizieren mit einem Profil-Server;
Fig. 3 ein schematisches Diagramm eines Subnetzwerks eines Kommunikationsnetzwerkes mit einer Mehrzahl von Subnetzwerken;
Fig. 4 ein schematisches Diagramm eines Verfahrens zum Bereitstellen eines Kommunikationsprofils für die Kommunikation über ein Kommunikationsnetzwerk unter Verwendung eines Profil-Servers; und
Fig. 5 ein schematisches Diagramm eines Verfahrens zum Kommunizieren mit einem Profil-Server unter Verwendung einer Netzwerkentität.

### DETAILIERTE BESCHREIBUNG DER FIGUREN

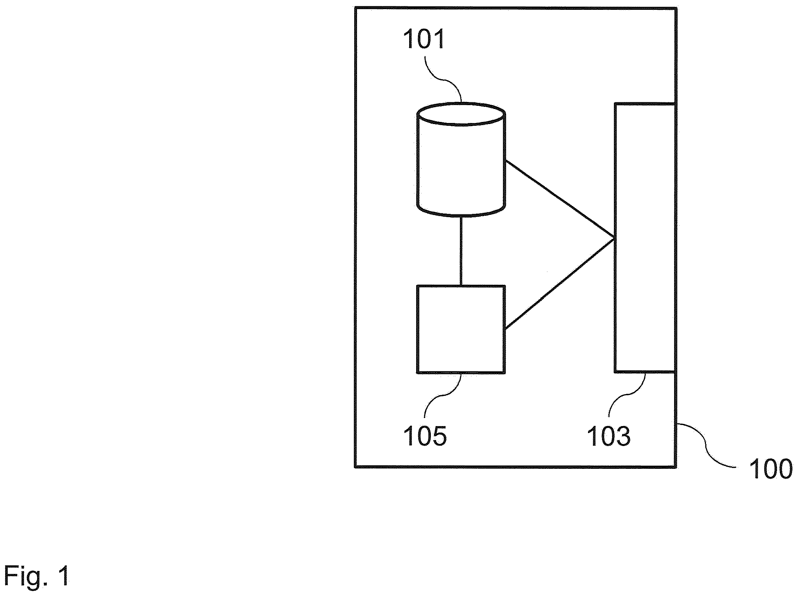

Fig. 1 zeigt ein schematisches Diagramm eines Profil-Servers 100 zum Bereitstellen eines Kommunikationsprofils für die Kommunikation über ein Kommunikationsnetzwerk, wobei das Kommunikationsprofil einem Teilnehmeridentitätsmodul zugeordnet ist.

Der Profil-Server 100 umfasst eine Datenbank 101, in welcher eine Mehrzahl von Subskriptionen mit einer Mehrzahl von Kennungen gespeichert ist, wobei jeder Subskription eine Kennung zugeordnet ist, und wobei jede Subskription Subskriptionsdaten zum Erzeugen eines Kommunikationsprofils umfasst. Der Profil-Server 100 umfasst ferner eine Kommunikationsschnittstelle 103, welche ausgebildet ist, eine Kennung von dem Teilnehmeridentitätsmodul zu empfangen. Der Profil-Server 100 umfasst zudem einen Prozessor 105, welcher ausgebildet ist, eine Subskription aus der Datenbank 101 abzurufen, welche der empfangenen Kennung zugeordnet ist, Subskriptionsdaten aus der abgerufenen Subskription zu extrahieren, und das Kommunikationsprofil auf der Basis der extrahierten Subskriptionsdaten zu erzeugen. Die Kommunikationsschnittstelle 103 ist ferner ausgebildet, das erzeugte Kommunikationsprofil an das Teilnehmeridentitätsmodul auszusenden, um das Kommunikationsprofil für die Kommunikation über das Kommunikationsnetzwerk bereitzustellen.

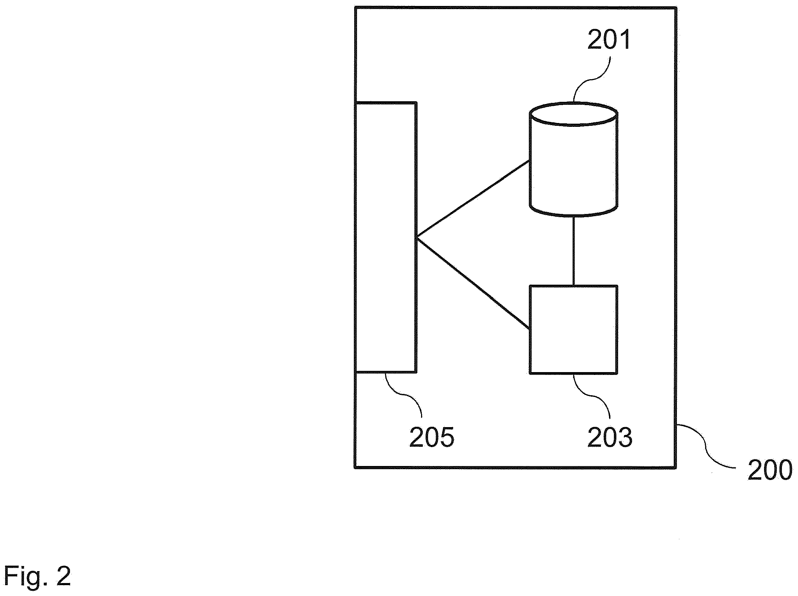

Fig. 2 zeigt ein schematisches Diagramm einer Netzwerkentität 200 zum Kommunizieren mit einem Profil-Server.

Die Netzwerkentität 200 umfasst eine Datenbank 201, in welcher eine Mehrzahl von Subskriptionen gespeichert ist, wobei jede Subskription Subskriptionsdaten zum Erzeugen eines Kommunikationsprofils umfasst, und wobei jede Subskription einem Subskriptionstyp zugeordnet ist. Die Netzwerkentität 200 umfasst ferner einen Prozessor 203, welcher ausgebildet ist, eine Subskription aus der Mehrzahl von Subskriptionen auszuwählen, wobei die ausgewählte Subskription einer Kennung zugeordnet ist. Der Prozessor 203 ist ferner ausgebildet, ein Bereitstellungssignal zu erzeugen, wobei das Bereitstellungssignal die ausgewählte Subskription mit der Kennung umfasst. Die Netzwerkentität 200 umfasst zudem eine Kommunikationsschnittstelle 205, welche ausgebildet ist, das Bereitstellungssignal an den Profil-Server auszusenden.

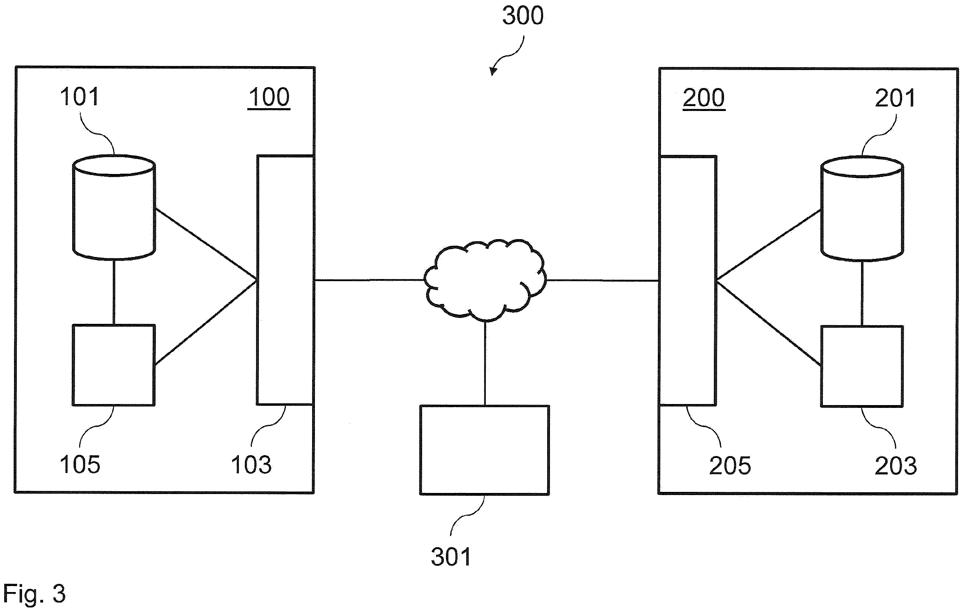

Fig. 3 zeigt ein schematisches Diagramm eines Subnetzwerks 300 eines Kommunikationsnetzwerkes mit einer Mehrzahl von Subnetzwerken. Das Subnetzwerk 300 umfasst einen Profil-Server 100 und eine Netzwerkentität 200. Das Subnetzwerk 300 umfasst ferner ein Teilnehmeridentitätsmodul 301.

Der Profil-Servers 100 dient dem Bereitstellen eines Kommunikationsprofils für die Kommunikation über ein Kommunikationsnetzwerk, wobei das Kommunikationsprofil dem Teilnehmeridentitätsmodul 301 zugeordnet ist. Der Profil-Server 100 umfasst eine Datenbank 101, in welcher eine Mehrzahl von Subskriptionen mit einer Mehrzahl von Kennungen gespeichert ist, wobei jeder Subskription eine Kennung zugeordnet ist, und wobei jede Subskription Subskriptionsdaten zum Erzeugen eines Kommunikationsprofils umfasst. Der Profil-Server 100 umfasst ferner eine Kommunikationsschnittstelle 103, welche ausgebildet ist, eine Kennung von dem Teilnehmeridentitätsmodul 301 zu empfangen. Der Profil-Server 100 umfasst zudem einen Prozessor 105, welcher ausgebildet ist, eine Subskription aus der Datenbank 101 abzurufen, welche der empfangenen Kennung zugeordnet ist, Subskriptionsdaten aus der abgerufenen Subskription zu extrahieren, und das Kommunikationsprofil auf der Basis der extrahierten Subskriptionsdaten zu erzeugen. Die Kommunikationsschnittstelle 103 ist ferner ausgebildet, das erzeugte Kommunikationsprofil an das Teilnehmeridentitätsmodul 301 auszusenden, um das Kommunikationsprofil für die Kommunikation über das Kommunikationsnetzwerk bereitzustellen.

Die Netzwerkentität 200 umfasst eine Datenbank 201, in welcher eine Mehrzahl von Subskriptionen gespeichert ist, wobei jede Subskription Subskriptionsdaten zum Erzeugen eines Kommunikationsprofils umfasst, und wobei jede Subskription einem Subskriptionstyp zugeordnet ist. Die Netzwerkentität 200 umfasst ferner einen Prozessor 203, welcher ausgebildet ist, eine Subskription aus der Mehrzahl von Subskriptionen auszuwählen, wobei die ausgewählte Subskription einer Kennung zugeordnet ist. Der Prozessor 203 ist ferner ausgebildet, das Bereitstellungssignal zu erzeugen, wobei das Bereitstellungssignal die ausgewählte Subskription mit der Kennung umfasst. Die Netzwerkentität 200 umfasst zudem eine Kommunikationsschnittstelle 205, welche ausgebildet ist, das Bereitstellungssignal an den Profil-Server 100 auszusenden. Der Profil-Server 100 kann ausgebildet sein, das Bereitstellungssignal von der Netzwerkentität 200 zu empfangen. Dadurch können Subskriptionen mit Kennungen in der Datenbank 101 effizient bereitgestellt werden. Ferner kann die Datenbank 101 effizient aktualisiert werden.

Das Konzept ermöglicht es, eine Mehrzahl von Subskriptionen (engl. "Subscriptions") in Stapeln (engl. "Batches") zu erzeugen und vorzuspeichern bzw. zu lagern, und ein Kommunikationsprofil bedarfssynchron (JIT) erst dann zu erzeugen, wenn das Teilnehmeridentitätsmodul 301 ein Herunterladen des Kommunikationsprofils anstößt. Durch den Ablauf können die Vorteile einer bedarfssynchronen Erzeugung (JIT) von Kommunikationsprofilen von Teilnehmeridentitätsmodulen genutzt werden, auch wenn die Einrichtung der Kommunikationsprofile in Stapeln erfolgt. Dabei können Subskriptionstypen (engl. "SubscriptionTypes") zum Einsatz kommen.

Es werden die nachfolgenden Definitionen zur Beschreibung des Ablaufs verwendet:
- Subskription (engl. "Subscription"):
   Subskriptionsdaten, die zur Einrichtung eines Kommunikationsprofils in einem Kommunikationsnetzwerk verwendet werden.
   Beispiele: für das HLR: IMSI / Ki; für Abrechnungssysteme: ICCID oder IMSI, gegebenenfalls MSISDN.
- Subskriptionstyp (engl. "SubscriptionType" oder "SubsType"): Legt beispielsweise fest, in welchem Wertebereich eine Subskription bzw. Subskriptionsdaten liegen.
   Beispiel: Für spezielle Anwendungen liegen die IMSIs in einem bestimmten Wertebereich.
   Beispiel: Für Prepaid und Postpaid können verschiedene ICCID Wertebereiche vorgesehen sein.
- eingebettete Eigenschaften (engl. "eProps"): Eigenschaften eines Kommunikationsprofils, die von Eigenschaften eines Teilnehmeridentitätsmoduls und/oder eines Kommunikationsgerätes abhängig sind.
   Beispiel: Profilgröße, welche beispielsweise vom freien Speicherplatz eines Teilnehmeridentitätsmoduls abhängen kann.
   Beispiel: NFC-Fähigkeit, welche von der NFC-Fähigkeit eines Teilnehmeridentitätsmoduls und/oder eines Kommunikationsgeräts abhängen kann.
   Die eingebetteten Eigenschaften (engl. "eProps") können gegebenenfalls nicht aus einer Teilnehmeridentitätskennung abgeleitet werden.
- Profiltyp (engl. "ProfileType"):
   Legt Eigenschaften fest, welche beispielsweise produktbezogen sind, wie Postpaid oder Prepaid bei einem bestimmten Service Provider, aber unabhängig von der Subskription und damit dem Subskriptionstyp sind. Diese Eigenschaften kann ein Netzbetreiber (engl. "Mobile Network Operator", MNO) festlegen, ohne die Eigenschaften eines bestimmten Ziel-Teilnehmeridentitätsmoduls zu kennen.
   Beispiele: Applikationen eines Teilnehmeridentitätsmoduls, ein Dateisystem eines Teilnehmeridentitätsmoduls, SPN, SPID, GID, PLMN Selector, Netzwerkalgorithmus.
   Ein Profiltyp kann verschiedene Ausprägungen haben, die von dem Teilnehmeridentitätsmodul abhängen können und dadurch verschiedene eingebettete Eigenschaften ("eProps") haben können.
   Beispielsweise kann ein Profiltyp für Postpaid folgende Ausprägungen haben:
   - "groß" mit "vielen" Applikationen und "großem" Telefonbuch für "große" Teilnehmeridentitätsmodule;
   - "klein" mit "wenigen" Applikationen und "kleinem" Telefonbuch für "kleine" Teilnehmeridentitätsmodule.
   Das Telefonbuch kann durch Abbreviated Dialing Numbers (ADNs) repräsentiert sein.
- Subskriptionslager (engl. "Subscription Store"):
   Virtuelles Lager von produzierten Kommunikationsprofilen
- Profil-Server bzw. Profile Provisioner (PP):
   Kann einem SMDP+ Server gemäß GSMA Standard entsprechen. Kann ferner ein Kommunikationsprofil erzeugen und eine Übertragung auf ein Teilnehmeridentitätsmodul durchführen.
- Netzbetreiber (engl. "Mobile Network Operator", MNO):
   Im Folgenden werden dadurch auch die vom Netzbetreiber betriebene Systeme, beispielsweise die Netzwerkentität 200, bezeichnet, welche die beschriebenen Abläufe implementieren und durchführen können.

Die folgenden Eigenschaften können folglich verwendet werden, um ein Kommunikationsprofil zu erzeugen:
- Profiltyp ("ProfileType");
- eingebettete Eigenschaften ("eProps"), entsprechend der Ausprägung;
- Subskription ("Subscription") eines bestimmten Subskriptionstyps ("SubcriptionType");
- Individuelle Daten, außer der Subskriptionsdaten, die bedarfssynchron (JIT) erzeugt werden können, beispielsweise PINs, PUKs, ACCs (Access Control Classes), OTA Schlüssel, Schlüssel für Applikationen, etc.

Die Erzeugung und Einrichtung von Subskriptionen kann folgendermaßen durchgeführt werden:
Der Netzbetreiber definiert eine Mehrzahl von Subskriptionstypen ("SubscriptionTypes"), die von dessen Produktportfolio für Kommunikationsprofile abhängen kann. Beispiele hierfür sind Wertebereiche für IMSIs oder Wertebereiche für ICCIDs.

Der Netzbetreiber gewährleistet, dass jederzeit eine genügend hohe Anzahl von Subskriptionen ("Subscriptions") in den Systemen des Netzbetreibers, insbesondere in Abrechnungssystemen und im HLR, eingerichtet sind. Die Einrichtung kann beispielsweise stapelweise erfolgen. Diese Einrichtung kann auch als Produktion von Subskriptionen für ein virtuelles Lager aufgefasst werden. Ein Abrufen eines Kommunikationsprofiles durch ein Teilnehmeridentitätsmodul und/oder die Freischaltung einer Subskription entspricht mithin einer Entnahme aus dem virtuellen Lager.

Das Erzeugen und Abrufen eines Kommunikationsprofils (engl. "Profile Download") durch ein Teilnehmeridentitätsmodul kann beispielsweise unter Verwendung zweier unterschiedlicher Ansätze durchgeführt werden: Operator Push (OP) oder Activation Code (AC). Im Folgenden wird die bedarfssynchrone Erzeugung von Kommunikationsprofilen für diese beiden Ansätze beschrieben.

### Operator Push (OP):

Hierbei hat ein Kunde eines Netzbetreibers ein Produkt aus dem Portfolio des Netzbetreibers gewählt und dem Netzbetreiber die Teilnehmeridentitätskennung des Teilnehmeridentitätsmoduls zur Verfügung gestellt, auf welches ein Kommunikationsprofil geladen werden soll. Die Teilnehmeridentitätskennung kann eine eUICCID (EID) sein. Der Ablauf ist dann wie folgt:

### Schritt OP1:

Der Netzbetreiber wählt einen Profiltyp ("ProfileType") und einen Subskriptionstyp ("SubsType"), die zu dem gewählten Produkt passen.

### Beispiele:

- Für ein Produkt "eSIM Postpaid" einen Profiltyp "Postpaid" mit Postpaid Telefonbüchern (ADNs, FNDs, SDNs) als Profildaten sowie einen Subskriptionstyp mit einem Wertebereich der ICCIDs für Postpaid-Kommunikationsprofile.
- Für ein Produkt "eSIM Service Provider X" einen Profiltyp "Service Provider X", wobei die Profildaten einen spezifischen Service Provider Name (SPN) und Telefonbücher für "Service Provider X" enthalten, sowie einen Subskriptionstyp mit einem Wertebereich der IMSIs, welcher für Service Provider X spezifisch ist.

### Schritt OP2:

Der Netzbetreiber entnimmt dem Subskriptionslager ("SubscriptionStore") eine Subskription des gewählten Subskriptionstyps. Das Subskriptionslager kann beispielsweise die Datenbank 201 umfassen.

### Schritt OP3:

Der Netzbetreiber wählt einen Profil-Server 100 bzw. Profile Provisioner (PP), der im Stande ist, ein Kommunikationsprofil auf der Grundlage des Profiltyps und des Subskriptionstyps zu erzeugen, wobei die Wahl insbesondere vom Profiltyp abhängen kann, und übergibt dem Profil-Server 100 die Profildaten eines bestimmten Profiltyps, die Subskription mit den Subskriptionsdaten und die Teilnehmeridentitätskennung. Der Profil-Server 100 kann diese Daten beispielsweise in der Datenbank 101 ablegen.

### Schritt OP4:

Sobald sich ein Kommunikationsgerät mit dem Teilnehmeridentitätsmodul 301 mit der Teilnehmeridentitätskennung zwecks Abrufs eines Kommunikationsprofils mit dem Profil-Server 100 verbindet, sendet das Teilnehmeridentitätsmodul 301 an den Profil-Server 100 Folgendes aus:
- die Teilnehmeridentitätskennung; und
- spezifische Daten des Teilnehmeridentitätsmodules 301 oder des Kommunikationsgerätes, welche für die eingebetteten Eigenschaften ("eProps") von Bedeutung sind, beispielsweise den freien Speicherplatz des Teilnehmeridentitätsmoduls 301, und die NFC-Fähigkeit des Teilnehmeridentitätsmoduls 301 oder des Kommunikationsgerätes.

Ferner können weitere Daten ausgesendet werden, beispielsweise Daten kryptografischer Natur, die zur Bindung eines Kommunikationsprofils an die Teilnehmeridentitätskennung verwendet werden. Dies kann beispielsweise nach üblichen Ansätzen erfolgen.

### Schritt OP5:

Der Profil-Server 100 entnimmt aus seiner Datenbank 101 Profildaten eines Profiltyps und die Subskription mit den Subskriptionsdaten für die Teilnehmeridentitätskennung. Falls mehrere Ausprägungen eines Profiltyps vorhanden sind, wählt der Profil-Server 100 eine Ausprägung mit eingebetteten Eigenschaften ("eProps") aus, die mit dem Teilnehmeridentitätsmodul 301 kompatibel sind, beispielsweise für ein Teilnehmeridentitätsmodul 301 mit geringem freien Speicherplatz eine Ausprägung mit eingebetteten Eigenschaften für geringen Speicherplatz.

### Schritt OP6:

Der Profil-Server 100 erzeugt ein Kommunikationsprofil auf der Grundlage der Profildaten des angegebenen Profiltyps, den eingebetteten Eigenschaften der Ausprägung und der Subskription mit den Subskriptionsdaten und stellt dieses Kommunikationsprofil zum Abruf durch das Teilnehmeridentitätsmodul 301 bereit.

### Schritt OP7:

Das Kommunikationsprofil kann auf das Teilnehmeridentitätsmodul 301 mit der Teilnehmeridentitätskennung oder das Kommunikationsgerät geladen werden.

### Activation Code (AC):

Hierbei hat ein Kunde ein Produkt aus dem Portfolio eines Netzbetreibers gewählt. Der Ablauf ist dann wie folgt:

### Schritt AC1:

Analog zu Schritt OP1.

### Schritt AC2:

Analog zu Schritt OP2.

### Schritt AC3:

Der Netzbetreiber wählt einen Profil-Server 100, der im Stande ist, ein Kommunikationsprofil mit Profildaten eines Profiltyps und Subskriptionsdaten eines Subskriptionstyps zu erzeugen, wobei die Wahl insbesondere vom Profiltyp abhängen kann.

### Schritt AC4:

Der Netzbetreiber erzeugt, selbst oder durch Dritte, einen Aktivierungscode bzw. Activation Code (AC), welcher ein eindeutiges Token und eine Netzwerkadresse, beispielsweise eine URL, des Profil-Servers 100 anzeigt.

### Schritt AC5:

Der Netzbetreiber sendet dem Profil-Server 100 Profildaten eines Profiltyps, die Subskription mit den Subskriptionsdaten und das Token. Der Profil-Server 100 legt diese Daten in der Datenbank 101 ab.

### Schritt AC6:

Der Netzbetreiber übergibt den Aktivierungscode an den Kunden, beispielsweise in Form eines QR-Codes.

### Schritt AC7:

Der Kunde gibt den Aktivierungscode in das Kommunikationsgerät mit dem Teilnehmeridentitätsmodul 301, beispielsweise durch Scannen des QR-Codes, ein.

### Schritt AC8:

Dieser Schritt erfolgt analog zu Schritt OP4.

Das Teilnehmeridentitätsmodul 301 oder das Kommunikationsgerät extrahiert das Token und die Netzwerkadresse des Profil-Servers 100 aus dem Aktivierungscode und sendet an den Profil-Server 100 folgendes aus:
- das Token; und
- spezifische Daten des Teilnehmeridentitätsmodules 301 oder des Kommunikationsgerätes, welche für die eingebetteten Eigenschaften ("eProps") von Bedeutung sind, beispielsweise den freien Speicherplatz des Teilnehmeridentitätsmoduls 301, und die NFC-Fähigkeit des Teilnehmeridentitätsmoduls 301 oder des Kommunikationsgerätes.

Ferner können weitere Daten ausgesendet werden, beispielsweise Daten kryptografischer Natur, die zur Bindung eines Kommunikationsprofils an die Teilnehmeridentitätskennung verwendet werden. Dies kann beispielsweise nach üblichen Ansätzen erfolgen.

### Schritt AC9:

Dieser Schritt erfolgt analog zu Schritt OP5.

Der Profil-Server 100 entnimmt aus seiner Datenbank 101 Profildaten eines Profiltyps und die Subskription mit den Subskriptionsdaten für das Token. Falls mehrere Ausprägungen eines Profiltyps vorhanden sind, wählt der Profil-Server 100 eine Ausprägung mit eingebetteten Eigenschaften ("eProps") aus, die mit dem Teilnehmeridentitätsmodul 301 kompatibel sind, beispielsweise für ein Teilnehmeridentitätsmodul 301 mit geringem freien Speicherplatz eine Ausprägung mit eingebetteten Eigenschaften für geringen Speicherplatz.

### Schritt AC10:

Dieser Schritt erfolgt analog zu Schritt OP6.

### Schritt AC11:

Dieser Schritt erfolgt analog zu Schritt OP7.

Die Einrichtung der Subskriptionen in die Backendsysteme des Netzbetreibers kann ebenfalls bedarfssynchron (JIT) erfolgen.

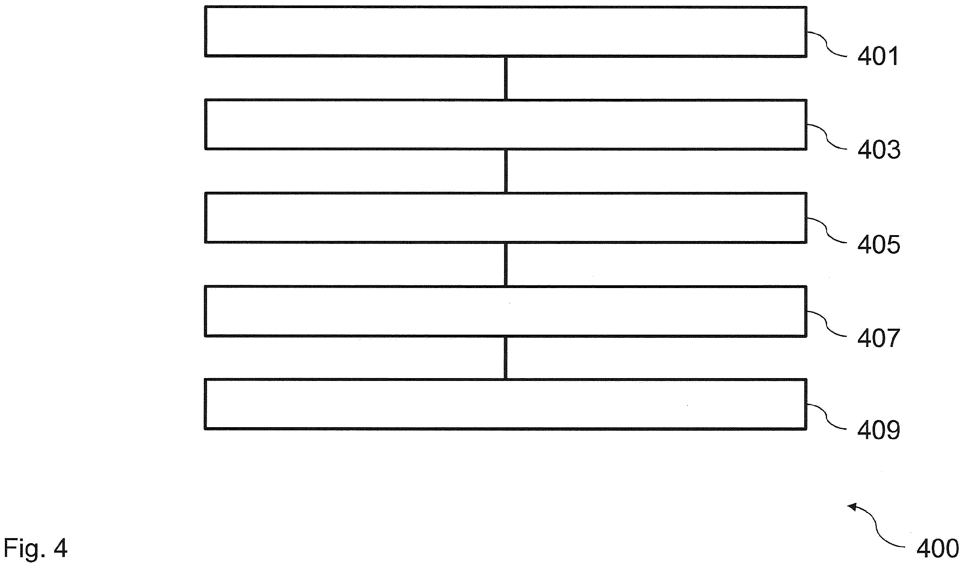

Fig. 4 zeigt ein schematisches Diagramm eines Verfahrens 400 zum Bereitstellen eines Kommunikationsprofils für die Kommunikation über ein Kommunikationsnetzwerk unter Verwendung eines Profil-Servers, wobei das Kommunikationsprofil einem Teilnehmeridentitätsmodul zugeordnet ist.

Der Profil-Server umfasst eine Datenbank, eine Kommunikationsschnittstelle und einen Prozessor. In der Datenbank ist eine Mehrzahl von Subskriptionen mit einer Mehrzahl von Kennungen gespeichert, wobei jeder Subskription eine Kennung zugeordnet ist, und wobei jede Subskription Subskriptionsdaten zum Erzeugen eines Kommunikationsprofils umfasst.

Das Verfahren 400 umfasst ein Empfangen 401 einer Kennung von dem Teilnehmeridentitätsmodul durch die Kommunikationsschnittstelle, ein Abrufen 403 einer Subskription aus der Datenbank durch den Prozessor, welche der empfangenen Kennung zugeordnet ist, ein Extrahieren 405 von Subskriptionsdaten aus der abgerufenen Subskription durch den Prozessor, ein Erzeugen 407 des Kommunikationsprofils auf der Basis der extrahierten Subskriptionsdaten durch den Prozessor, und ein Aussenden 409 des erzeugten Kommunikationsprofils an das Teilnehmeridentitätsmodul durch die Kommunikationsschnittstelle, um das Kommunikationsprofil für die Kommunikation über das Kommunikationsnetzwerk bereitzustellen.

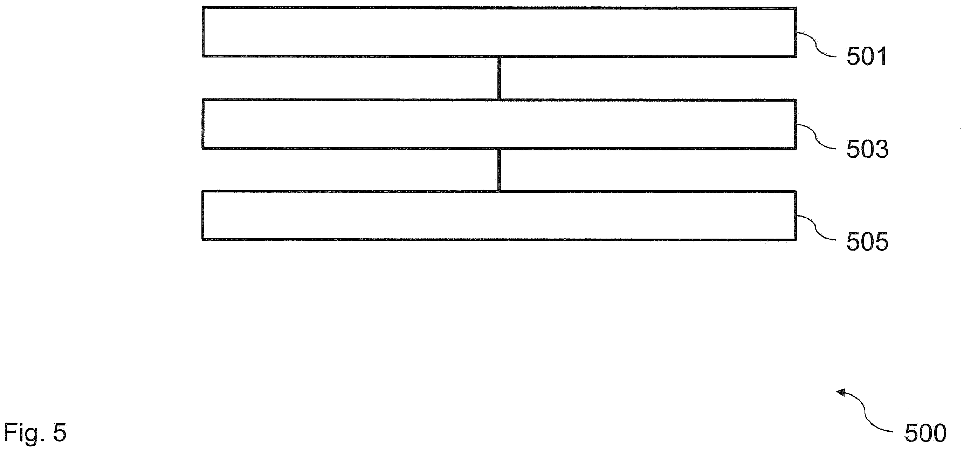

Fig. 5 zeigt ein schematisches Diagramm eines Verfahrens 500 zum Kommunizieren mit einem Profil-Server unter Verwendung einer Netzwerkentität.

Die Netzwerkentität umfasst eine Datenbank, einen Prozessor und eine Kommunikationsschnittstelle. In der Datenbank ist eine Mehrzahl von Subskriptionen gespeichert, wobei jede Subskription Subskriptionsdaten zum Erzeugen eines Kommunikationsprofils umfasst, und wobei jede Subskription einem Subskriptionstyp zugeordnet ist.

Das Verfahren 500 umfasst ein Auswählen 501 einer Subskription aus der Mehrzahl von Subskriptionen durch den Prozessor, wobei die ausgewählte Subskription einer Kennung zugeordnet ist, ein Erzeugen 503 eines Bereitstellungssignals durch den Prozessor, wobei das Bereitstellungssignal die ausgewählte Subskription mit der Kennung umfasst, und ein Aussenden 505 des Bereitstellungssignals an den Profil-Server durch die Kommunikationsschnittstelle.

Alle in Verbindung mit einzelnen Ausführungsformen gezeigten und beschriebenen Merkmale können in unterschiedlicher Kombination in dem erfindungsgemäßen Gegenstand vorgesehen sein, um gleichzeitig deren vorteilhafte Wirkungen zu realisieren.

### BEZUGSZEICHENLISTE

- 100: Profil-Server
- 101: Datenbank
- 103: Kommunikationsschnittstelle
- 105: Prozessor

- 200: Netzwerkentität
- 201: Datenbank
- 203: Prozessor
- 205: Kommunikationsschnittstelle

- 300: Subnetzwerk
- 301: Teilnehmeridentitätsmodul

- 400: Verfahren zum Bereitstellen eines Kommunikationsprofils
- 401: Empfangen
- 403: Abrufen
- 405: Extrahieren
- 407: Erzeugen
- 409: Aussenden

- 500: Verfahren zum Kommunizieren mit einem Profil-Server
- 501: Auswählen
- 503: Erzeugen
- 505: Aussenden

## Patentansprüche

1. Profil-Server (100) zum Bereitstellen eines Kommunikationsprofils für die Kommunikation über ein Kommunikationsnetzwerk, wobei das Kommunikationsprofil einem Teilnehmeridentitätsmodul (301) zugeordnet ist, mit:
einer Datenbank (101), in welcher eine Mehrzahl von Subskriptionen mit einer Mehrzahl von Kennungen gespeichert ist, wobei jeder Subskription eine Kennung zugeordnet ist, wobei jede Subskription Subskriptionsdaten zum Erzeugen eines Kommunikationsprofils umfasst, wobei die Subskriptionsdaten eine International Mobile Subscriber Identity, IMSI, einen Authentifizierungsschlüssel, Ki, oder einen Integrated Circuit Card Identifier, ICCID, umfassen;
einer Kommunikationsschnittstelle (103), welche ausgebildet ist, ein Bereitstellungssignal von einer Netzwerkentität (200) zu empfangen, wobei das empfangene Bereitstellungssignal eine Subskription mit einer Kennung umfasst, wobei die Subskription der Kennung zugeordnet ist, wobei die Kommunikationsschnittstelle (103) ferner ausgebildet ist, die Subskription mit der Kennung aus dem empfangenen Bereitstellungssignal zu extrahieren, und die extrahierte Subskription mit der extrahierten Kennung in der Datenbank (101) zu speichern, wobei die Kommunikationsschnittstelle (103) ferner ausgebildet ist, eine Kennung von dem Teilnehmeridentitätsmodul (301) zu empfangen; und
einem Prozessor (105), welcher ausgebildet ist, eine Subskription aus der Datenbank (101) abzurufen, welche der empfangenen Kennung zugeordnet ist, Subskriptionsdaten aus der abgerufenen Subskription zu extrahieren, und das Kommunikationsprofil auf der Basis der extrahierten Subskriptionsdaten zu erzeugen;
wobei die Kommunikationsschnittstelle (103) ferner ausgebildet ist, das erzeugte Kommunikationsprofil an das Teilnehmeridentitätsmodul (301) auszusenden, um das Kommunikationsprofil für die Kommunikation über das Kommunikationsnetzwerk bereitzustellen.

2. Profil-Server (100) nach Anspruch 1, wobei jeder Subskription ferner Profildaten zum Erzeugen eines Kommunikationsprofils zugeordnet sind, und wobei der Prozessor (105) ausgebildet ist, das Kommunikationsprofil ferner auf der Basis der Profildaten zu erzeugen, welche der abgerufenen Subskription zugeordnet sind.

3. Profil-Server (100) nach Anspruch 2, wobei die Profildaten umfassen: eine Softwareanwendung des Teilnehmeridentitätsmodules (301), eine Angabe einer Softwareanwendung des Teilnehmeridentitätsmodules (301), einen Softwarecode, ein Dateisystem des Teilnehmeridentitätsmodules (301), oder eine Angabe eines Netzwerkalgorithmus für die Kommunikation über das Kommunikationsnetzwerk.

4. Profil-Server (100) nach einem der vorstehenden Ansprüche, wobei die empfangene Kennung eine Teilnehmeridentitätskennung ist, welche dem Teilnehmeridentitätsmodul (301) zugeordnet ist, oder wobei die empfangene Kennung ein Token ist, welches dem Teilnehmeridentitätsmodul (301) zugeordnet ist.

5. Subnetzwerk (300) eines Kommunikationsnetzwerkes mit einer Mehrzahl von Subnetzwerken, mit:
einem Profil-Server (100) nach einem der Ansprüche 1 bis 4; und
einer Netzwerkentität (200) zum Kommunizieren mit dem Profil-Server (100), mit:
einer Datenbank (201), in welcher eine Mehrzahl von Subskriptionen gespeichert ist, wobei jede Subskription Subskriptionsdaten zum Erzeugen eines Kommunikationsprofils umfasst, wobei die Subskriptionsdaten eine International Mobile Subscriber Identity, IMSI, einen Authentifizierungsschlüssel, Ki, oder einen Integrated Circuit Card Identifier, ICCID, umfassen, wobei jede Subskription einem Subskriptionstyp zugeordnet ist, wobei der Subskriptionstyp einen Wertebereich, insbesondere eine Untergrenze und eine Obergrenze, von Subskriptionsdaten anzeigt;
einem Prozessor (203), welcher ausgebildet ist, eine Subskription aus der Mehrzahl von Subskriptionen auszuwählen, wobei die ausgewählte Subskription einer Kennung zugeordnet ist, und wobei der Prozessor (203) ferner ausgebildet ist, ein Bereitstellungssignal zu erzeugen, wobei das Bereitstellungssignal die ausgewählte Subskription mit der Kennung umfasst; und
einer Kommunikationsschnittstelle (205), welche ausgebildet ist, das Bereitstellungssignal an den Profil-Server (100) auszusenden.

6. Subnetzwerk (300) nach Anspruch 5, wobei die Kennung eine Teilnehmeridentitätskennung ist, wobei die Kommunikationsschnittstelle (205) ausgebildet ist, die Teilnehmeridentitätskennung zu empfangen, oder wobei die Kennung ein Token ist, wobei der Prozessor (203) ausgebildet ist, das Token zu erzeugen.

7. Subnetzwerk (300) nach einem der Ansprüche 5 oder 6, wobei jeder Subskription ferner Profildaten zum Erzeugen eines Kommunikationsprofils zugeordnet sind, und wobei jede Subskription einem Profiltyp zugeordnet ist.

8. Subnetzwerk (300) nach Anspruch 7, wobei der Prozessor (203) ausgebildet ist, den Profil-Server (100) aus einer Mehrzahl von Profil-Servern auf der Basis des Profilstyps der ausgewählten Subskription auszuwählen.

9. Verfahren (400) zum Bereitstellen eines Kommunikationsprofils für die Kommunikation über ein Kommunikationsnetzwerk unter Verwendung eines Profil-Servers (100), wobei das Kommunikationsprofil einem Teilnehmeridentitätsmodul (301) zugeordnet ist, wobei der Profil-Server (100) eine Datenbank (101), eine Kommunikationsschnittstelle (103) und einen Prozessor (105) umfasst, wobei in der Datenbank (101) eine Mehrzahl von Subskriptionen mit einer Mehrzahl von Kennungen gespeichert ist, wobei jeder Subskription eine Kennung zugeordnet ist, wobei jede Subskription Subskriptionsdaten zum Erzeugen eines Kommunikationsprofils umfasst, wobei die Subskriptionsdaten eine International Mobile Subscriber Identity, IMSI, einen Authentifizierungsschlüssel, Ki, oder einen Integrated Circuit Card Identifier, ICCID, umfassen, mit:
Empfangen eines Bereitstellungssignals von einer Netzwerkentität (200) durch die Kommunikationsschnittstelle (103), wobei das empfangene Bereitstellungssignal eine Subskription mit einer Kennung umfasst, wobei die Subskription der Kennung zugeordnet ist;
Extrahieren der Subskription mit der Kennung aus dem empfangenen Bereitstellungssignal durch die Kommunikationsschnittstelle (103);
Speichern der extrahierten Subskription mit der extrahierten Kennung in der Datenbank (101) durch die Kommunikationsschnittstelle (103);
Empfangen (401) einer Kennung von dem Teilnehmeridentitätsmodul (301) durch die Kommunikationsschnittstelle (103);
Abrufen (403) einer Subskription aus der Datenbank (101) durch den Prozessor (105), welche der empfangenen Kennung zugeordnet ist;
Extrahieren (405) von Subskriptionsdaten aus der abgerufenen Subskription durch den Prozessor (105);
Erzeugen (407) des Kommunikationsprofils auf der Basis der extrahierten Subskriptionsdaten durch den Prozessor (105); und
Aussenden (409) des erzeugten Kommunikationsprofils an das Teilnehmeridentitätsmodul (301) durch die Kommunikationsschnittstelle (103), um das Kommunikationsprofil für die Kommunikation über das Kommunikationsnetzwerk bereitzustellen.

10. Computerprogramm mit einem Programmcode zum Ausführen des Verfahrens (400) nach Anspruch 9.

## Claims

1. Profile server (100) for providing a communication profile for communication via a communication network, wherein the communication profile is assigned to a subscriber identity module (301), said profile server comprising:
a database (101), in which a plurality of subscriptions comprising a plurality of identifications is stored, wherein an identification is assigned to each subscription, wherein each subscription comprises subscription data for generating a communication profile, wherein the subscription data comprise an International Mobile Subscriber Identity, IMSI, an authentication key, Ki, or an Integrated Circuit Card Identifier, ICCID;
a communication interface (103) which is configured to receive a provision signal from a network entity (200), wherein the received provision signal comprises a subscription comprising an identification, wherein the subscription is assigned to the identification, wherein the communication interface (103) is further configured to extract the subscription comprising the identification from the received provision signal and to store the extracted subscription comprising the extracted identification in the database (101), wherein the communication interface (103) is further configured to receive an identification from the subscriber identity module (301); and
a processor (105) which is configured to retrieve from the database (101) a subscription which is assigned to the received identification, to extract subscription data from the retrieved subscription, and to generate the communication profile on the basis of the extracted subscription data;
wherein the communication interface (103) is further configured to send the generated communication profile to the subscriber identity module (301) in order to provide the communication profile for communication via the communication network.

2. Profile server (100) according to claim 1, wherein profile data for generating a communication profile are also assigned to each subscription, and wherein the processor (105) is configured to generate the communication profile also on the basis of the profile data assigned to the retrieved subscription.

3. Profile server (100) according to claim 2, wherein the profile data comprise: a software application of the subscriber identity module (301), information relating to a software application of the subscriber identity module (301), a software code, a file system of the subscriber identity module (301), or information relating to a network algorithm for communication via the communication network.

4. Profile server (100) according to one of the preceding claims, wherein the received identification is a subscriber identity identification which is assigned to the subscriber identity module (301), or wherein the received identification is a token which is assigned to the subscriber identity module (301).

5. Subnetwork (300) of a communication network comprising a plurality of subnetworks, said subnetwork comprising:
a profile server (100) according to one of claims 1 to 4; and
a network entity (200) for communicating with the profile server (100), said network entity comprising:
a database (201) in which a plurality of subscriptions is stored, wherein each subscription comprises subscription data for generating a communication profile, wherein the subscription data comprise an International Mobile Subscriber Identity, IMSI, an authentication key, Ki, or an Integrated Circuit Card Identifier, ICCID, wherein each subscription is assigned to a subscription type, wherein the subscription type indicates a range of values, in particular a lower limit and an upper limit, for subscription data;
a processor (203) which is configured to select a subscription from the plurality of subscriptions, wherein the selected subscription is assigned to an identification, and wherein the processor (203) is further configured to generate a provision signal, wherein the provision signal comprises the selected subscription comprising the identification; and
a communication interface (205) which is configured to send the provision signal to the profile server (100).

6. Subnetwork (300) according to claim 5, wherein the identification is a subscriber identity identification, wherein the communication interface (205) is configured to receive the subscriber identity identification, or wherein the identification is a token, wherein the processor (203) is configured to generate the token.

7. Subnetwork (300) according to one of claims 5 or 6, wherein profile data for generating a communication profile are also assigned to each subscription, and wherein each subscription is assigned to a profile type.

8. Subnetwork (300) according to claim 7, wherein the processor (203) is configured to select the profile server (100) from a plurality of profile servers on the basis of the profile type of the selected subscription.

9. Method (400) for providing a communication profile for communication via a communication network using a profile server (100), wherein the communication profile is assigned to a subscriber identity module (301), wherein the profile server (100) comprises a database (101), a communication interface (103) and a processor (105), wherein a plurality of subscriptions comprising a plurality of identifications is stored in the database (101), wherein an identification is assigned to each subscription, wherein each subscription comprises subscription data for generating a communication profile, wherein the subscription data comprise an International Mobile Subscriber Identity, IMSI, an authentication key, Ki, or an Integrated Circuit Card Identifier, ICCID, in which method:
the communication interface (103) receives a provision signal from a network entity (200), wherein the received provision signal comprises a subscription comprising an identification, wherein the subscription is assigned to the identification;
the communication interface (103) extracts the subscription comprising the identification from the received provision signal;
the communication interface (103) stores the extracted subscription comprising the extracted identification in the database (101);
the communication interface (103) receives (401) an identification from the subscriber identity module (301);
the processor (105) retrieves (403) from the database (101) a subscription which is assigned to the received identification;
the processor (105) extracts (405) subscription data from the retrieved subscription;
the processor (105) generates (407) the communication profile on the basis of the extracted subscription data; and
the communication interface (103) sends (409) the generated communication profile to the subscriber identity module (301) in order to provide the communication profile for communication via the communication network.

10. Computer program comprising program code for executing the method (400) according to claim 9.

## Revendications

1. Serveur de profil (100) destiné à fournir un profil de communication pour la communication via un réseau de communication, ledit profil de communication étant affecté à un module d'identité d'abonné (301), comprenant :
une base de données (101), où une pluralité d'abonnements est stockée avec une pluralité d'identifiants, un identifiant étant associé à chaque abonnement, chaque abonnement comprenant des données d'abonnement pour la génération d'un profil de communication, les données d'abonnement comprenant une identité internationale d'abonné mobile IMSI, une clé d'authentification Ki, ou un identifiant de carte à circuit intégré ICCID ;
une interface de communication (103), prévue pour recevoir un signal de fourniture d'une entité de réseau (200), le signal de fourniture reçu comprenant un abonnement avec un identifiant, l'abonnement étant associé à l'identifiant, l'interface de communication (103) étant en outre prévue pour extraire du signal de fourniture reçu l'abonnement avec l'identifiant, et pour mémoriser l'abonnement extrait avec l'identifiant extrait dans la base de données (101), l'interface de communication (103) étant en outre prévue pour recevoir un identifiant du module d'identité d'abonné (301) ; et
un processeur (105), prévu pour appeler un abonnement dans la base de données (101), associé à l'identifiant reçu, pour extraire des données d'abonnement de l'abonnement appelé, et générer le profil de communication sur la base des données d'abonnement extraites ;
l'interface de communication (103) étant en outre prévue pour adresser le profil de communication généré au module d'identité d'abonné (301), pour fournir le profil de communication pour la communication via le réseau de communication.

2. Serveur de profil (100) selon la revendication 1, où des données de profil sont en outre associées à chaque abonnement pour la génération d'un profil de communication, et où le processeur (105) est prévu pour générer en outre le profil de communication sur la base des données de profil associées à l'abonnement appelé.

3. Serveur de profil (100) selon la revendication 2, où les données de profil comprennent :
une application logicielle du module d'identité d'abonné (301), une indication d'une application logicielle du module d'identité d'abonné (301), un code logiciel, un système de fichiers du module d'identité d'abonné (301), ou une indication d'un algorithme de réseau pour la communication via le réseau de communication.

4. Serveur de profil (100) selon l'une des revendications précédentes, où l'identifiant reçu est une étiquette d'identité d'abonné associée au module d'identité d'abonné (301), ou bien où l'identifiant reçu est un jeton associé au module d'identité d'abonné (301).

5. Sous-réseau (300) d'un réseau de communication comprenant une pluralité de sous-réseaux, avec :
un serveur de profil (100) selon l'une des revendications 1 à 4 ; et
une entité de réseau (200) pour la communication avec le serveur de profil (100), comprenant :
une base de données (201), où une pluralité d'abonnements est stockée, chaque abonnement comprenant des données d'abonnement pour la génération d'un profil de communication, les données d'abonnement comprenant une identité internationale d'abonné mobile IMSI, une clé d'authentification Ki, ou un identifiant de carte à circuit intégré ICCID, chaque abonnement étant affecté à un type d'abonnement, le type d'abonnement indiquant une plage de valeurs, en particulier une limite inférieure et une limite supérieure des données d'abonnement ;
un processeur (203), prévu pour sélectionner un abonnement parmi la pluralité d'abonnements, l'abonnement sélectionné étant associé à un identifiant, et ledit processeur (203) étant en outre prévu pour générer un signal de fourniture, le signal de fourniture comprenant l'abonnement avec l'identifiant sélectionné ; et
une interface de communication (205), prévue pour adresser le signal de fourniture au serveur de profil (100).

6. Sous-réseau (300) selon la revendication 5, où l'identifiant est une étiquette d'identité d'abonné, l'interface de communication (205) étant prévue pour recevoir l'étiquette d'identité d'abonné, ou bien où l'identifiant est un jeton, le processeur (203) étant prévu pour générer le jeton.

7. Sous-réseau (300) selon la revendication 5 ou la revendication 6, où des données de profil sont en outre associées à chaque abonnement pour la génération d'un profil de communication, et où chaque abonnement est affecté à un type de profil.

8. Sous-réseau (300) selon la revendication 7, où le processeur (203) est prévu pour sélectionner le serveur de profil (100) parmi une pluralité de serveurs de profil sur la base du type de profil de l'abonnement sélectionné.

9. Procédé (400) de fourniture d'un profil de communication pour la communication via un réseau de communication recourant à un serveur de profil (100), ledit profil de communication étant affecté à un module d'identité d'abonné (301), le serveur de profil (100) comprenant une base de données (101), une interface de communication (103) et un processeur (105), une pluralité d'abonnements étant stockée avec une pluralité d'identifiants dans la base de données (101), un identifiant étant attribué à chaque abonnement, chaque abonnement comprenant des données d'abonnement pour la génération d'un profil de communication, les données d'abonnement comprenant une identité internationale d'abonné mobile IMSI, une clé d'authentification Ki, ou un identifiant de carte à circuit intégré ICCID, ledit procédé comprenant :
la réception d'un signal de fournitures d'une entité de réseau (200) par l'interface de communication (103), le signal de fourniture reçu comprenant un abonnement avec un identifiant, l'abonnement étant associé à l'identifiant ;
l'extraction de l'abonnement avec l'identifiant du signal de fourniture reçu par l'interface de communication (103) ;
la mémorisation de l'abonnement extrait avec l'identifiant extrait dans la base de données (101) par l'interface de communication (103) ;
la réception (401) d'un identifiant du module d'identité d'abonné (301) par l'interface de communication (103) ;
l'appel (403) d'un abonnement associé à l'identifiant reçu dans la base de données (101) par le processeur (105) ;
l'extraction (405) des données d'abonnement de l'abonnement appelé par le processeur (105) ;
la génération (407) du profil de communication sur la base des données d'abonnement extraites par le processeur (105) ; et
l'envoi (409) du profil de communication généré au module d'identité d'abonné (301) par l'interface de communication (103), pour fournir le profil de communication pour la communication via le réseau de communication.

10. Programme informatique comprenant un code programme pour l'exécution du procédé (400) selon la revendication 9.
